# EUROPÄISCHE PATENTANMELDUNG

(11) **EP 3 960 928 A1**
(43) Veröffentlichungstag der Anmeldung: **02.03.2022**
(21) Anmeldenummer: 21191425.4
(22) Anmeldetag: 16.08.2021
(51) Int. Cl.: D06N 3/00, D06N 3/12, B32B 5/26, D06M 17/04

(54) **EINFACH RECYCLEFÄHIGE KUNSTLEDERMATERIALEN AUF BASIS VON BIOPOLYMEREN ZUR KURZZEITVERWENDUNG UND ZUR GESTEUERTEN ZERSETZUNG IN MONOMERE**

(30) Priorität: 27.08.2020 DE 102020210811
(71) Anmelder: Benecke-Kaliko AG, 30419 Hannover (DE)
(72) Erfinder: Neumann, Thorsten, 30419 Hannover (DE); Gaiser, Stefan, 30419 Hannover (DE); Wittmann, Gabriele, 30419 Hannover (DE)
(74) Vertreter: Continental Corporation

(57) **Zusammenfassung**

Die Erfindung betrifft ein Kunstleder, umfassend einen textilen Träger und mindestens eine auf den textilen Träger haftfest aufgebrachte Kunststoffschicht, wobei mindestens eine Kunststoffschicht und/oder der textile Träger aus einem biologisch abbaubaren Biopolymer gebildet ist, welches bei Lagerung oberhalb 70 °C und einer Luftfeuchtigkeit von mindestens 80 % innerhalb von maximal 28 Tagen zu einem Pulver degradiert. Es wird ferner auch eine Verwendung für dieses Kunstleder angegeben.

## Beschreibung

Die Erfindung betrifft ein Kunstleder, umfassend einen textilen Träger und mindestens eine auf den textilen Träger haftfest aufgebrachte Kunststoffschicht.

Ferner betrifft die Erfindung auch die Verwendung eines derartigen Kunstleders.

Kunstleder der eingangs genannten Art sind vielfältig bekannt und werden beispielsweise als Verkleidungs- oder Bezugsmaterial für Automobilinnenräume, zum Beispiel im Bereich der Türverkleidungen oder der Sitzbezüge vielfältig eingesetzt. Weitere Anwendungsgebiete ergeben sich bei Sitzmöbeln für Innen- und Außenanwendungen. Die bisher bekannten Kunstleder sind üblicherweise auf Basis von Polyurethanen oder PVC sowie auf Basis von Polyolefinen aufgebaut und weisen meist eine deutlich längere Haltbarkeit auf, als die entsprechende Nutzungsdauer des damit ausgerüsteten Gebrauchsgegenstandes beträgt. Eine sortenreine Trennung wie auch Aufarbeitung eines als Kunstleder eingesetzten Verbundwerkstoffes ist meist nicht möglich, da der textile Träger häufig aus anderen Kunststoffmaterialien wie die darauf aufgebrachten Kunststoffschichten gebildet ist, diese jedoch nicht ohne weiteres voneinander getrennt werden können. Es bleibt daher meist nur die Entsorgung im Wege der Verbrennung, was verbesserungswürdig erscheint.

Teilweise sind derartige Substrate, insbesondere Kunstleder oder entsprechend aus den Kunststoffschichten gebildete Folien nur für kurze Zeit in Verwendung und werden nach Abschluss der Verwendungsdauer ausgetauscht und entsorgt, auch wenn sie an sich noch eine längere Lebensdauer hätten. Gründe hierfür sind beispielsweise, dass diese Substrate Designansprüchen nicht mehr genügen oder Verschmutzungen oder Teilbeschädigungen den Austausch und die Entsorgung erforderlich werden lassen. Ein besonderes Problem stellt sich im Bereich der Automobilüberlassung im Rahmen des CarSharing, in welchem häufig Schutzfolien den Innenraum und insbesondere den Bezug des Fahrersitzes vor Abnutzung und Verschmutzung schützen. Solche Folien können beispielsweise blasfolienextrudierte Polyolefinfolien sein, welche jedoch keine wünschenswerte haptische Anmutung bieten und zudem auch noch problematisch für die Fahrzeugsicherheit sind, da kein ausreichender Halt zur Sitzoberfläche besteht und der Fahrer insoweit auf dem Fahrzeugsitz leicht rutschen kann. Ferner sind diese Folien nach deren Gebrauch nur bedingt recyclefähig und zumeist nur unzureichend biologisch abbaubar.

Aufgabe der Erfindung ist es daher, ein Kunstleder der eingangs genannten Art vorzuschlagen, welches für Kurzzeitanwendungen im Automobilbereich, insbesondere für CarSharing Fahrzeuge geeignet ist oder auch für entsprechende Exterieur- und Interieuranwendungen.

Zur Lösung der gestellten Aufgabe wird erfindungsgemäß ein Kunstleder gemäß den Merkmalen des Patentanspruches 1 vorgeschlagen.

Vorteilhafte Ausgestaltungen und Weiterbildungen der Erfindung sind Gegenstand der abhängigen Ansprüche.

Der erfindungsgemäße Vorschlag zur Ausbildung eines Kunstleders beruht darauf, dass mindestens eine der Kunststoffschichten und/oder der textile Träger aus einem biologisch abbaubaren Biopolymer gebildet ist, welches bei Lagerung oberhalb 70 °C und einer Luftfeuchtigkeit von mindestens 80 % innerhalb von maximal 28 Tagen zu einem Anteil von mindestens 50 % zu einem Pulver degradiert.

Erfindungsgemäß ist es somit möglich, ein für Kurzzeitanwendungen geeignetes Kunstleder auszubilden, welches über mindestens eine kurzzeitig, nämlich innerhalb von maximal 28 Tagen, bei leicht einstellbaren Umweltbedingungen oberhalb 70 °C und mindestens 80 % Luftfeuchtigkeit zu Pulver degradierbare Schicht verfügt, die eine leichte Austauschbarkeit und gute Recyclingfähigkeit mit sich bringt.

So kann in einer Ausführungsform der Erfindung lediglich der textile Träger aus dem Biopolymer gebildet sein, wohingegen die darauf aufgebrachte mindestens eine Kunststoffschicht konventionell aus Polyurethan, PVC oder Polyolefinen gebildet sein kann. Bei Erreichen der Nutzungsdauer wird dieses Kunstleder den spezifizierten Lagerungsbedingungen oberhalb 70 °C und 70 % Luftfeuchtigkeit über einen Zeitraum von maximal 28 Tagen ausgesetzt, woraufhin der textile Träger sich durch Degradation in einem Anteil von mindestens 50 %, vorzugsweise sogar vollständig, zu einem Pulver auflöst und die verbleibende mindestens eine Kunststoffschicht sortenrein einem entsprechenden Recycling zugeführt werden kann.

In einer alternativen Ausführungsform der Erfindung kann eine der auf den textilen Träger haftfest aufgebrachten Kunststoffschichten, vorzugsweise die unmittelbar auf den textilen Träger aufgebrachte Kunststoffschicht aus dem biologisch abbaubaren Biopolymer gebildet sein, sodass bei Erreichen der Nutzungsdauer und Aussetzen dieses Kunstleders unter die oben spezifizierten Lagerungsbedingungen eine Degradation dieser Kunststoffschicht zu einem Pulver herbeigeführt werden kann, mit der Folge, dass der textile Träger und gegebenenfalls weitere aufgebrachte Kunststoffschichten voneinander separiert und einem sortenreinen Recycling zugeführt werden können.

Eine weitere mögliche Ausführungsform der Erfindung sieht vor, dass alle Kunststoffschichten aus dem biologisch abbaubaren Biopolymer gebildet sind, sodass diese nach Erreichen der Nutzungsdauer und unter den oben spezifizierten Lagerungsbedingungen zu Pulver degradieren und lediglich der verbleibende textile Träger einem sortenreinen Recycling zugeführt werden kann.

Schließlich ist es auch möglich, alle Kunststoffschichten sowie den textilen Träger aus dem biologisch abbaubaren Biopolymer zu bilden, sodass nach Erreichen der Nutzungsdauer und unter den oben spezifizierten Lagerungsbedingungen das gesamte Kunstleder zu Pulver degradieren kann.

Ein solches für kurze Zeiträume verwendbares Kunstleder kann insbesondere im Bereich des CarSharing verwendet werden, um durch leichte Austauschbarkeit Hygieneanforderungen im Automobilinnenraum erfüllen zu können und ferner bei Anschmutzung oder Vandalismus schnell und einfach den gewünschten Gebrauchszustand bei hoher Umweltverträglichkeit wiederherstellen zu können. Ferner besteht die Möglichkeit, mittels unterschiedlicher Designanpassung durch Farben, Prägemuster und Haptik eine Individualisierung des Innenraums vorzunehmen, was insbesondere bei CarSharing Fahrzeugen oder Kurzzeitüberlassung an andere Personen wünschenswert ist. Gerade im aktuellen im Jahr 2020 vorliegenden Krisenfall aufgrund des Corona-Virus Covid 19 zeigte sich, dass auch im Bereich Transportation sowie Interior und Exterior strengere Reinigungsvorschriften vorliegen und auferlegt werden. Pandemien dieser Art werden zukünftig erneut aufkommen. Die in diesem Zusammenhang praktizierte Verwendung von Desinfektionsmitteln auf Lösemittelbasis, wie beispielsweise Isopropanol, Ethanol, Methanol sowie den darin enthaltenen Ölen und Tensiden auf Kunstoffoberflächen, wie beispielweise Kunstleder auf PVC Basis, welches Weichmacher sowie Polyurethane enthält, brachte diese Kunstleder beispielsweise zum Aufquellen. Es zeigte sich somit, dass diese bisher als Standardkunstledersysteme verwendeten Substrate eine Schwachstelle aufweisen und innerhalb von kürzester Zeit, stellenweise schon nach ca. 4-6 Wochen, bei täglicher Reinigung zur Rissbildung tendieren sowie oberflächlich abgetragen werden. Diese Materialien können ebenfalls mit einem erfindungsgemäßen Kurzzeit-Kunstleder, beispielsweise auf PLA-Basis ersetzt oder überzogen bzw. beaufschlagt werden und einfach nach Verwendung und Kontamination biologisch in die Ausgangsprodukte abgebaut bzw. zersetzt werden. Zusätzlich wirken die erfindungsgemäß vorgesehenen PLA-Polymere in antimikrobialer Weise, wie schon in diversen Publikationen gezeigt wurde, siehe z.B. https-//onlinelibrary.wiley.com/doi/full/10.1111/1750-3841.12534/ Tawakkal, Intan SMA, et al. "A review of poly (lactic acid)-based materials for antimicrobial packaging." Journal of food science 79.8 (2014): R1477-R1490.

Ferner kann das erfindungsgemäße Kunstleder ebenfalls im Medical Covering Bereich eingesetzt werden, wodurch die Verwendung von Auflagefolien auf Basis von Polymeren wie Polyolefin verringert wird.

Nach einem Vorschlag der Erfindung ist das Biopolymer auf Basis von Polymilchsäure (PLA) ausgebildet, was insoweit auch bevorzugt ist.

Neben PLA können jedoch auch alternative biologisch abbaubare Polymere, wie Polyhydroxyvaleriansäure (PHV), Polyhydroxybutyrat (PHB), Polyhydroxyalkanoat (PHA) und/oder Polyhydroxyfettsäuren (PHF) als Biopolymer vorgesehen und verwendet werden, einschließlich Abmischungen dieser biologisch abbaubaren Polymere mit oder ohne PLA.

Zur selektiven Zersetzung bzw. Degradation des aus dem Biopolymer gebildeten textilen Trägers und/oder mindestens einer Kunststoffschicht wird eine Lagerung oberhalb von 70 °C bei hoher Feuchtigkeit von mindestens 80 % notwendig. Dies kann in einer entsprechenden Klimakammer leicht vorgehalten werden. Nach etwa einer Woche unter diesen Lagerungsbedingungen tritt eine Esterspaltung und Umkristallisation ein, die sich zunächst in immer stärker ausgeprägtem Weißbruchverhalten der aus dem Biopolymer hergestellten Kunststoffschicht bzw. des textilen Trägers äußert. Die Degradation ist abgeschlossen, wenn nach etwa 3 Wochen, maximal aber innerhalb 28 Tagen, abhängig von der Stabilisierung, Dicke des Materials und Anteil an etwaigen Füllstoffen, zumindest in einem Anteil von 50% des Ausgangsmaterials nur noch ein Pulver von der aus dem Biopolymer hergestellten Kunststoffschicht bzw. dem textilen Träger vorliegt, wobei idealerweise eine vollständige Degradation zu Pulver erfolgt. Während der Degradation durchläuft die aus dem Biopolymer gebildete Kunststoffschicht bzw. der textile Träger somit mehrere Degradationsstufen, beginnend mit einer Mikrorissbildung über fortschreitende Versprödung bis hin zur finalen Pulverausbildung. Das final vorliegende Pulver, im Falle von PLA in Form von Milchsäure, ist wasserlöslich und kann dem Recyclingkreislauf wieder zugeführt werden, zum Beispiel mittels Bakterien oder über eine chemisch katalysierte Veresterung. Durch einen hohen oder niedrigen pH-Wert wird die Degradation begünstigt. Somit findet während der Bildung von Milchsäure ein autokatalytischer Abbau statt.

Nach einem weiteren Vorschlag der Erfindung kann das Biopolymer auch in Form eines Hybridpolymers als Abmischung aus beispielsweise PLA mit PVC oder Polyurethan verwendet werden, da auch in diesem Beispiel die vorangehend erläuterte Degradation stattfindet, sodass final ein Pulver zum Beispiel in Form von Milchsäure sowie das verwendete Hybridpolymer übrigbleibt. Die pulverförmige Milchsäurefraktion kann zum Beispiel durch Zugabe von Wasser einfach aufgelöst werden, sodass das Hybridpolymer sortenrein einer Aufarbeitung zugeführt werden kann.

In jedem Fall kann das verwendete Biopolymer des erfindungsgemäßen Kunstleders Hilfs- und Zusatzstoffe, insbesondere ausgewählt aus der Weichmacher, Farbstoffe, Pigmente, Füllstoffe, Stabilisatoren und/oder Vernetzer umfassenden Gruppe enthalten.

Geeignete Weichmacher können zum Beispiel auf Basis von Citraten, Adipaten sowie üblichen Polymerweichmachern gebildet sein und dienen zur Einstellung der gewünschten Weichheit der aus dem Biopolymer hergestellten Kunststoffschicht und/oder des textilen Trägers. Weitere mögliche Weichmacher basieren auf Cardanol (CD, renewable natural cashew nutshell), Triethylcitrat (TEC), Acetyltributylcitrat (ATBC), epoxidiertem Sojabohnenöl (ESO), L-Lactid oder Polyethylenglykolen (PEG). Durch die Auswahl der Weichmacher kann einerseits die Glasübergangstemperatur bis zu einem Bereich von etwa 0 bis 10 °C verringert werden, andererseits kann auch die Bildung von Kristallstrukturen verhindert werden, um damit einem Weißbruch, der beim Biegen von kristallinen Materialien entstehen kann, vorzubeugen.

Für die gewünschte Farbgebung können Farbstoffe und Pigmente auf organischer oder anorganischer Basis eingesetzt werden.

Als Füllstoffe können beispielsweise Carbonate auf Basis von Calcium, Magnesium oder anderen Metallen sowie Oxide eingesetzt werden. Ferner können auch funktionale Füllstoffe, wie Flammschutzmittel, beispielsweise Hydroxide auf Basis von Aluminium und Magnesium, Bor sowie Zinkverbindungen und stickstoff- und phosphathaltige organische und anorganische Verbindungen eingesetzt werden. Ferner können auch Thermoleitfähigkeitsfüllstoffe verwendet werden, beispielsweise Aluminiumoxid sowie Nitrid-und/oder Carbidverbindungen, wie beispielsweise Siliziumcarbid.

Als Stabilisatoren können unter anderem HALS, Radikalfänger, Epoxide, Calcium und Zinksalze eingesetzt werden, darüber hinaus auch PHA-Stabilisatoren, wie Puffersysteme, um die eventuell entstehenden Milchsäuren abzufangen. Ferner werden Antioxidantien als Stabilisatoren eingesetzt. Auch kann in an sich bekannter Weise durch Lignin-Abmischungen die Stabilisation von beispielsweise PLA deutlich verbessert werden.

Durch die Verwendung von geeigneten Lacksystemen auf Basis von Acrylaten, PVC, Polyurethanen, Silikonen, gegebenenfalls umfassend Rheologiehilfsmittel sowie Mattierungsmittel können in Kombination mit Vernetzern auf Basis von Isocyanaten, Epoxiden, Carbodiimiden und Melaminen haptische und umwelteinflussrelevante Parameter, wie Rauigkeit oder Kratzfestigkeit verbessert und eingestellt werden. Ferner können diese Schichten mittels Elektronenstrahlen unter Einsatz entsprechender Additive vernetzt werden.

Das erfindungsgemäße Kunstleder kann zumindest im Bereich der dem textilen Träger entfernt liegenden und die oberseitige Sichtseite bildenden Kunststoffschichten durch Prägen mittels Stahl- oder Silikonwalzen oder über eine Matrize im Vakuumverfahren oberflächlich strukturiert werden, indem zum Beispiel ansprechende Ledernarben in die an der oberseitigen Sichtseite angeordneten Kunststoffschichten unter Erwärmung auf Temperaturen zwischen 130 und 250 °C eingebracht werden. Ebenfalls können derartige Strukturen durch eine Presse eingeformt werden.

Auch können die im Rahmen des erfindungsgemäßen Kunstleders eingesetzten Biopolymere, insbesondere PLA, mittels eines 3-D Druckers zu einer vollständigen oder teilweisen Kunststoffschicht des Kunstleders geformt werden, sodass Designapplikationen im 3-D Digitaldruck aus verschiedenfarbigen Biopolymeren zusammengefügt werden können. Auch ist es möglich, die gedruckten Applikationen in eine Matrixfolie oder Kunststoffschicht einzubetten, was üblicherweise als 2,5-D Druck bezeichnet wird.

In einer möglichen Ausgestaltung der Erfindung wird der textile Träger und/oder mindestens eine vollständige Kunststoffschicht des Kunstleders aus dem biologisch abbaubaren Biopolymer gebildet.

Alternativ ist es auch möglich, herkömmliche Kunstleder-Kunststoffschichten auf Basis von Polyurethan, PVC, Polyolefinen oder Abmischungen derselben (Hybridpolymere) zum Beispiel zur Ausbildung von Deckschichten oder Zwischenschichten des Kunstleders in kompakter, d. h. ungeschäumter oder geschäumter Struktur vorzusehen und in diese einen textilen Träger aus dem biologisch abbaubaren Biopolymer, beispielsweise PLA einzukaschieren. So ist es möglich, den textilen Träger nach Erreichen der Gebrauchsdauer in einer ersten Stufe selektiv zu degradieren, aufzulösen und die restliche, übrigbleibende Beschichtungskonstruktion sortenrein zu trennen.

In einer weiteren Ausführungsform der Erfindung enthält das erfindungsgemäße Kunstleder mindestens eine konventionell hergestellte Kunststoffschicht auf Basis von Polyurethan, PVC, Polyolefinen oder Abmischungen derselben, die benachbart zu einer aus dem Biopolymer gebildeten Kunststoffschicht angeordnet und haftfest mit dieser verbunden ist. Eine solche Hybridkonstruktion, beispielsweise bestehend aus einer auf den textilen Träger unmittelbar aufgebrachten PVC-Kunststoffschicht sowie einer aus Polyurethan gebildeten oberflächlichen Deckschicht, die über eine dazwischenliegende Kunststoffschicht aus dem Biopolymer miteinander verbunden sind, kann nach Erreichen der Gebrauchsdauer sortenrein getrennt werden, in dem die Kunststoffschicht aus dem Biopolymer durch die eingangs erwähnten Lagerungsbedingungen in ein Pulver degradiert wird, wodurch die aus unterschiedlichen Polymeren gebildete Deckschicht und auf den textilen Träger aufgebrachte PVC-Unterschicht voneinander getrennt und sortenrein recycelt werden können.

Eine biologisch vollständig abbaubare Ausführungsform des erfindungsgemäßen Kunstleders wird in einer weiteren Ausführungsform der Erfindung erhalten, bei der alle Kunststoffschichten und auch der textile Träger aus dem Biopolymer gebildet sind. Darüber hinaus können vollständig biologisch abbaubare Ausführungsformen auch durch Ausgestaltung einer oder mehrerer Kunststoffschichten aus handelsüblichen biodegradablen Polyurethanen erhalten werden, beispielsweise der von der Covestro Deutschland AG unter der Handelsbezeichnung Impranil^{®} DLN-SD vertriebenen Polyurethandispersion.

Das zur Herstellung mindestens einer Kunststoffschicht des erfindungsgemäßen Kunstleders verwendete Biopolymer kann als folienartige Schicht durch Kalandrieren oder Extrudieren hergestellt werden. Auf diese Weise kann auch eine entsprechende einzelne Folienschicht aus dem Biopolymer hergestellt werden.

Darüber hinaus kann beispielsweise im Coextrusionsverfahren ein mehrschichtiger Verbund sukzessive aufeinanderliegender Kunststoffschichten auf den bereitgestellten textilen Träger aufgebracht werden, wobei die einzelnen Kunststoffschichten sowohl kompakt bzw. ungeschäumt für die Ausbildung einer oberflächlichen Deckschicht als auch geschäumt zum Beispiel für die Ausbildung von Zwischenschichten ausgebildet sein können.

Alternativ kann das Biopolymer zur Ausbildung der mindestens einen Kunststoffschicht des erfindungsgemäßen Kunstleders auch als Dispersion verarbeitet werden, indem zunächst eine streichfähige Dispersion aus Pulverpartikeln des Biopolymers einer durchschnittlichen Partikelgröße kleiner 200 µm, vorzugsweise kleiner als 80 µm hergestellt wird, indem die Pulverpartikel in Wasser unter Zusatz ionischer, anionischer oder neutraler ein- oder mehrwertiger Seifen dispergiert werden und auf eine geeignete Unterlage aufgestrichen werden. Eine solche geeignete Unterlage kann beispielsweise von einem Release Liner oder einem flachen oder genarbten silikonbasierten Streichpapier gebildet sein. Anschließend wird die aufgestrichene Dispersion unter Wärmezufuhr getrocknet, geliert bzw. aufgeschmolzen und gesintert und nachfolgend von der Unterlage abgezogen, was üblicherweise als Umkehrverfahren bezeichnet wird. Es können auch mehrere derartige Kunststoffschichten übereinander aufgetragen werden, bevor der textile Träger aufgebracht wird.

Darüber hinaus ist es auch möglich, Biopolymere, wie PLA zu Partikeln zu vermahlen und in einem geeigneten Lösungsmittel, zum Beispiel Aceton, Ethylacetat oder Propylencarbonat (4-Methyl-1,3-dioxolan-2-on) aufzulösen, wobei das zuletzt aufgeführte Dioxolan unter dem Gesichtspunkt des Flammpunktes besonders geeignet ist. Die solchermaßen gebildete Paste, welche die vorangehend beschriebenen Füllstoffe, Stabilisatoren, Farbstoffe und Pigmente sowie Vernetzer enthalten kann, wird sodann auf eine der vorangehend beschriebenen geeigneten Unterlagen aufgetragen, unter Wärmezufuhr getrocknet und ausgeliert. Auch hierbei können wieder unterschiedliche Schichten aufeinander aufgetragen werden. Das bevorzugte Konzentrationsverhältnis liegt im Falle von PLA als Biopolymer etwa im Bereich von 20 bis 60 % PLA zu Lösemittel. Durch Zugabe geeigneter Schaumadditive auf chemischer oder physikalischer Basis, zum Beispiel Mikrohohlkugeln kann eine haptische bzw. Dichteanpassung vorgenommen werden. Das solchermaßen aus einem textilen Träger und mindestens einer, vorzugsweise mehreren haftfest darauf aufgebrachten Kunststoffschichten gebildete erfindungsgemäße Kunstleder kann zum Beispiel durch Anwendung der oben genannten Lösemittel schichtweise verklebt bzw. bei niedrigen Temperaturen verschweißt werden, alternativ kommt auch das übliche Vernähen in Betracht.

Die für das erfindungsgemäße Kunstleder verwendeten Kunststoffschichten können wahlweise kompakt, d. h. ungeschäumt, geschäumt oder auch als Faserschicht ausgebildet sein. Die Ausbildung als Faserschicht kann sowohl zur Herstellung des textilen Trägers als auch zur Herstellung von textilen Flächengebilden dienen, die in konventionelle Beschichtungen auf Basis von Polyurethan, PVC, Polyolefinen oder Abmischungen derselben einkaschiert werden.

Das vorangehend erläuterte Kunstleder ist insbesondere zur Verwendung als Verkleidungs- oder Bezugsmaterial für Automobilinnenräume, ferner auch für andere Anwendungen im Bereich Interieur oder Exterieur geeignet.

Insbesondere in den Fällen, in denen das Kunstleder sortenrein durch ausschließliche Verwendung des biologisch abbaubaren Biopolymers für den textilen Träger und alle darauf aufgebrachten Kunststoffschichten gebildet ist, kommen Anwendungen im Bereich der Sportbekleidung sowie auch als Markisen- bzw. Verschattungsstoff in Betracht, die lediglich saisonal und damit über einen geringen Zeitraum eingesetzt und anschließend ersetzt werden.

Sofern das erfindungsgemäße Kunstleder nicht den vorangehend erläuterten Lagerungsbedingungen oberhalb 70 °C und einer Luftfeuchtigkeit von mindestens 80 % unterworfen wird, kann dieses auch über Jahre hinweg stabil bleiben und Verwendung finden.

## Patentansprüche

1. Kunstleder, umfassend einen textilen Träger und mindestens eine auf den textilen Träger haftfest aufgebrachte Kunststoffschicht, **dadurch gekennzeichnet, dass** mindestens eine Kunststoffschicht und/oder der textile Träger aus einem biologisch abbaubaren Biopolymer gebildet ist, welches bei Lagerung oberhalb 70 °C und einer Luftfeuchtigkeit von mindestens 80 % innerhalb von maximal 28 Tagen zu einem Anteil von mindestens 50 % zu einem Pulver degradiert.

2. Kunstleder nach Anspruch 1, **dadurch gekennzeichnet, dass** das Biopolymer auf Basis von Polymilchsäure (PLA), Polyhydroxyvaleriansäure (PHV), Polyhydroxybutyrat (PHB), Polyhydroxyalkanoat (PHA) und/oder Polyhydroxyfettsäuren (PHF) sowie Abmischungen derselben gebildet ist.

3. Kunstleder nach Anspruch 1 oder 2, **dadurch gekennzeichnet, dass** das Biopolymer in Abmischung mit Polyvinylchlorid oder Polyurethan verwendet wird.

4. Kunstleder nach einem der Ansprüche 1 bis 3, **dadurch gekennzeichnet, dass** das Biopolymer Weichmacher, Farbstoffe, Pigmente, Füllstoffe, Stabilisatoren und/oder Vernetzer enthält.

5. Kunstleder nach einem der Ansprüche 1 bis 4, **dadurch gekennzeichnet, dass** es mindestens eine Kunststoffschicht auf Basis von Polyurethan, PVC, Polyolefinen oder Abmischungen derselben enthält, die benachbart zu einer aus dem Biopolymer gebildeten Kunststoffschicht angeordnet und haftfest mit dieser verbunden ist.

6. Kunstleder nach einem der Ansprüche 1 bis 4, **dadurch gekennzeichnet, dass** alle Kunststoffschichten und der textile Träger aus dem Biopolymer gebildet sind.

7. Kunstleder nach einem der Ansprüche 1 bis 6, **dadurch gekennzeichnet, dass** die aus dem Biopolymer gebildete mindestens eine Kunststoffschicht durch Kalandrieren oder Extrudieren des Biopolymers hergestellt ist.

8. Kunstleder nach einem der Ansprüche 1 bis 6, **dadurch gekennzeichnet, dass** die aus dem Biopolymer gebildete mindestens eine Kunststoffschicht durch Herstellen einer streichfähigen Dispersion aus Pulverpartikeln des Biopolymers einer durchschnittlichen Partikelgröße kleiner 200 µm in Wasser unter Zusatz ionischer, anionischer oder neutraler ein- oder mehrwertiger Seifen und Aufstreichen der Dispersion auf eine Unterlage sowie Trocknen und Ausgelieren derselben unter Wärmezufuhr hergestellt ist.

9. Kunstleder nach einem der Ansprüche 1 bis 6, **dadurch gekennzeichnet, dass** die aus dem Biopolymer gebildete mindestens eine Kunststoffschicht durch Herstellen einer streichfähigen Paste aus in einem Lösungsmittel gelösten Partikeln des Biopolymers und Aufstreichen der Paste auf eine Unterlage sowie Trocknen und Ausgelieren derselben unter Wärmezufuhr hergestellt ist.

10. Kunstleder nach einem der Ansprüche 1 bis 9, **dadurch gekennzeichnet, dass** die aus dem Biopolymer gebildete mindestens eine Kunststoffschicht mittels eines 3-D Druckers hergestellt ist.

11. Kunstleder nach einem der Ansprüche 1 bis 10, **dadurch gekennzeichnet, dass** die mindestens eine aus dem Biopolymer gebildete Kunststoffschicht kompakt, geschäumt oder als Faserschicht ausgebildet ist.

12. Verwendung eines Kunstleders nach einem der Ansprüche 1 bis 11 als Verkleidungs- oder Bezugsmaterial für Automobilinnenräume.
